# EUROPEAN PATENT SPECIFICATION

(11) **EP 3 333 776 B1**
(45) Date of publication and mention of the grant of the patent: **27.01.2021**
(21) Application number: 16202794.0
(22) Date of filing: 07.12.2016
(51) Int. Cl.: G06K 19/07

(54) **ACTIVATING RFID TRANSPONDER WITH LIGHT**
AKTIVIERUNG VON RFID-TRANSPONDERN MIT LICHT
ACTIVATION DE TRANSPONDEUR RFID AU MOYEN DE LA LUMIÈRE

(43) Date of publication of application: 13.06.2018
(73) Proprietor: Porta Saber Lda, 1050-094 Lisbon (PT)
(72) Inventor: Miettinen, Jarkko Johannes, 33480 Ylöjärvi (FI); Izzatdust, Elzad Seyfulla Oglu, 2750-392 Cascais (PT)
(74) Representative: Koivisto, Harri Kristian

(56) References cited:
- WO-A1-00/16253
- DE-A1- 3 243 074
- DE-A1- 3 315 989
- DE-A1-102006 040 723
- US-A- 6 072 383
- US-A1- 2002 032 014
- US-A1- 2003 073 898
- US-A1- 2004 012 496
- US-A1- 2004 100 834
- US-A1- 2004 124 838
- US-A1- 2005 023 361
- US-A1- 2006 202 802
- US-A1- 2011 101 996
- US-A1- 2015 116 093
- US-A1- 2015 163 677

## Description

### BACKGROUND

Radio frequency identification (RFID) uses electromagnetic fields to identify and track transponders or tags that may be attached to objects, wherein the transponders may contain electronically stored information. A RFID system has transponders and readers configured to interact at a predefined frequency. Radio frequency identification tags, labels or transponders may be thin and flexible, suitable for attaching or embedding into various objects.

Passive RFID transponders may collect energy from a nearby RFID reader's magnetic field or propagating radio waves. They may lack an internal power source, instead relying on the externally generated power which may be created by a resonant circuit that is attached to the transponder or to a microchip providing further functions. In one example, a passport containing biometric data in the microchip is configured to transmit information at the predefined frequency to an interrogator device at airport security checkpoints.

The radio frequency communication may have security vulnerabilities. The object having the RFID transponder or label responds to radio frequency signals that may be received unobtrusively within the perimeter of the RFID transponder. The over-the-air data signalled between the interrogator device and the RFID transponder is often encrypted. However, the RFID transponders may not be able to prevent interrogator devices from retrieving their signals if the interrogator device energizes the RFID transponder and sends data query commands according to the appropriate standards used in the RFID communication.

In some security applications, during the critical phases of data exchange, the RFID transponder should be secured from unauthorized interrogation. The passive RFID transponder may be energized with an external radio transmitter, wherein a receiver device may retrieve some information from the RFID transponder. Even with metallic shielding around transponders, high-power transmitters may be able to energize the RFID transponder with electromagnetic coupling or propagation and retrieve information without authorization. Further examples of vulnerability may allow eavesdropping. The RFID transponder may be used for data communication when an unauthorized interrogator is in the vicinity, being able to listen to communications between the RFID transponder and the interrogator device which is supposed to be only communicating with it.

US2004/0124838 discloses wireless detuning of a resonant circuit in an MR imaging system. A device for use with an MR imaging system emits radiofrequency signals within a first range when acquiring data. An opto-electronic component within the device electrically communicates with the resonant circuit. The opto-electronic component is controlled to operate in a plurality of modes.

DE3243074 discloses an optical sensor for detecting or measuring quantities. At least one electrical resonant circuit, the resonant frequency or Q-value of which is arranged to be influenced by the quantity to be detected or measured is included in the electrical circuit of said opto-electric members.

DE102006040723 discloses a rfid transponder combined with an electronic sensor element that detects the ambient condition enabling specific transponders to be read in a targeted manner from a plurality of transponders.

WO00/16253 discloses a system for contactless bidirectional transmission of data and power between a reader and a chip-card, comprising a first optical path for transmission of data and power with a light source on the reader, a photodiode and a control logic unit on the chip-card, and a second magnetic path for transmission of data and power with a first inductor coil on the reader and a second induced coil on the chip-card.

US2015/0163677 discloses a device for protection against unauthorised use. The device comprises a first switch suitable for inhibiting the operation of the electronic system, the first switch being arranged as a short-circuit between at least two turns of the antenna.

US2011/0101996 discloses a performance enhancement of resonant sensors. An inductor-capacitor-resistor resonator sensor and a pick-up coil are in operative association with the LCR resonator sensor. Viscoelastic changes in the sensing film cause displacement of the antenna relative to the pick up coil.

### SUMMARY

The invention is defined by the independent claims.

Preferred embodiments are set out in the dependent claims.

This summary is provided to introduce a selection of concepts in a simplified form that are further described below in the detailed description. This summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

A radio frequency identification tag or transponder is configured to activate with light. An element configured to detect light enables communication between an interrogator device and an RFID transponder. A resonant circuit comprises resistance, inductance and capacitance elements in series. A control element is configured to change the behaviour of at least one element in response to detecting light. That causes a change in the resonant response of the resonant circuit. The interrogator device may not communicate with the RFID transponder unless it is activated with light. In one example of changing the resonant response, the resonant frequency is raised, requiring impractical transmission power from the interrogator device. In one example, the resistance of the resonant circuit is raised, damping the resonant frequency. In one example, the resonant circuit is opened with a switching element.

A predetermined amount of light enables the RFID transponder to respond to the interrogator in the specified frequency. For example, covered RFID transponders do not respond to the interrogator. In one case example of passports, a closed passport does not respond to or activate RFID functions unless the passport cover is opened and the RFID transponder is exposed to light. No part of the passport information can be read from within the passenger's pocket - for example, passport specifications may vary according to country and some specifications could respond at certain frequency, allowing citizens of that country to be selected from a group of people by RFID interrogator response. Enabling the functionality of the frequency response with light increases the security and privacy of the RFID transponder.

Many of the attendant features will be more readily appreciated as they become better understood by reference to the following detailed description considered in connection with the accompanying drawings. The embodiments described below are not limited to implementations which solve any or all the disadvantages of known radio frequency identification tags or transponders.

### BRIEF DESCRIPTION OF THE DRAWINGS

The present description will be better understood from the following detailed description read in light of the accompanying drawings, wherein
FIG. 1 illustrates schematically one example of an RFID transponder with a first type of control element;
FIG. 2 illustrates schematically one example of an RFID transponder with a second type of control element; and
FIG. 3 illustrates schematically one example of an RFID transponder with a third type of control element.

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilized. However, the same or equivalent functions and sequences may be accomplished by different examples.

Although the present examples are described and illustrated herein as being implemented as a radio frequency identification transponder, RFID tag or RFID transponder, the apparatus described is provided as an example and not a limitation. As those skilled in the art will appreciate, the present examples are suitable for application in a variety of different types of radio frequency identification transponder devices. Within this document, the RFID tag and the transponder have the same meaning.

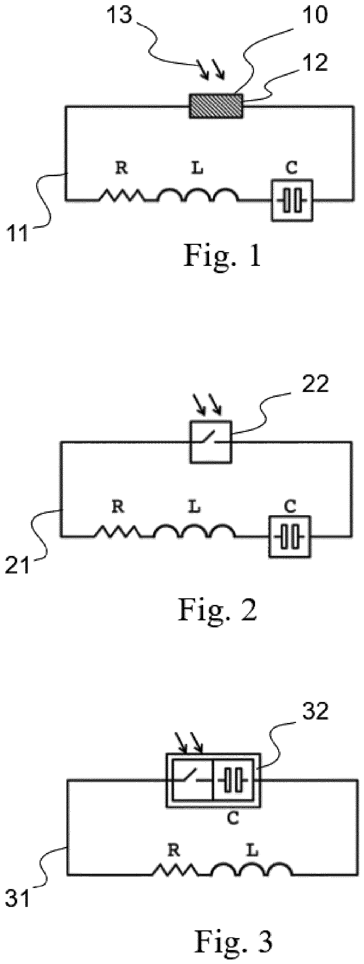

FIG. 1 illustrates schematically one example of the radio frequency identification transponder. A resistance element R, an inductance element L and a capacitance element C are connected in series, forming a resonant circuit 11. The inductance element L and the capacitance element C each have reactance that is equal or close to equal in magnitude but cancel each other, as they are 180 degrees apart in phase. The resistance provided by the resistance element R adjusts the selectivity of the oscillating frequency, wherein a lower resistance increases the selectivity and sensitivity. The resonant circuit 11 is configured to resonate at a first frequency, wherein the interrogator may communicate with the RFID transponder via radio waves at the first frequency. A control element 12 is connected to the resonant circuit. In one example, the control element 12 is connected in series with the resonant circuit 11.

The control element 12 comprises means for detecting light, for example, a photoresistive component, wherein a predetermined amount of light 13 causes the control element 12 to change a resonant response of the resonant circuit 11 at the first frequency. In one embodiment, the photoresistive component is a photoresistor configured to change the resistance of the resonant circuit in response to the predetermined amount of light. In one example of changing the resonant response, the resonating frequency is altered. In one example, the resistance of the resonant circuit is increased to a level, wherein the interrogator device would require impractical power levels to communicate with the RFID transponder.

In one example, the control element 12 operates as a switch, blocking the current in the series circuit. One example of the light-sensitive switch is a photodiode. In one example, the control element 10 comprises a photoresistive or other electrical component reacting to light - for example, starting to conduct electricity, reducing resistance, impedance or other electric property to a level which enables the operation of the resonant circuit 11.

In one example, the control element 10 is electrically connected in series to the resonant circuit 11, wherein the components in series define an RFID tag or an RFID transponder. The control element 12 may comprise some resistance, capacitance or inductance according to a non-ideal electric component, wherein these components are illustrated as part of the ideal electric model in FIG. 1. The component values may be chosen to enable an effective resonant circuit.

The control element 12 may be of any suitable form and construction according to the application. Examples of the control element 12 are a photodiode, a photoresistor, a light-sensitive surface-mountable electronic component, printed or otherwise created with additive process, a flexible material, such as laminated film, paste, or similar substance, configured to produce an electrically conductive element which under exposed light starts to conduct electricity. When a light from a source is received, the control element 12 starts to conduct current in the resonant circuit, based on predefined proportions of electrical components.

FIG. 2 illustrates schematically one example, wherein the control element 22 comprises a switching element configured to open or close the resonant circuit 21, causing the resonant circuit 21 to resonate at a second frequency. In one embodiment, the switching element is configured to open or close a portion of the inductance element L, causing the resonant circuit to resonate at a second frequency. In one embodiment, the control element 22 comprises a switching element configured to open or close a portion of the capacitance element C, causing the resonant circuit to resonate at a second frequency. In the open state, the resonant circuit may resonate at a frequency that is not applicable to the RFID interrogator. The wavelength may be a fraction of the usable wavelength, causing the open state frequency to be significantly higher than the closed state frequency. The closed state frequency is, in this example, the second frequency that is used for interrogation and for powering the RFID transponder.

In one embodiment, the switching element is a photodiode or a transistor circuit configured to cause a shortcut to the resonant circuit, having effect in the resistance, impedance, capacitance or other characteristic of the electric resonant circuit. In one embodiment, the control element 22 provides a pulse, for example, in the form of resistance of the resonant circuit, that an RFID microchip 22 can interpret as a signal. In one embodiment, the RFID microchip 22 comprises light-sensitive component functions reacting to light at any given frequency. The light-sensitive component may be integrated into the RFID microchip 22. In one example, the light-sensitive component is integrated into the RFID microchip 22. However, the light-sensitive component may function as a separate component from the RFID microchip 22, configured to enable data communication in the resonant circuit 21. In one example, the control element 22 comprises at least one processor and a memory storing instructions that, when executed, control the communication of the radio frequency identification transponder. The at least one processor and the memory are components of the RFID microchip.

FIG. 3 illustrates schematically one example, wherein the control element 32 comprises means for controlling the capacitance element C of the resonant circuit 31. The control element 32 comprises at least one processor and a memory storing instructions that, when executed, provide the capacitance C to the capacitance element. The capacitance C value may be predefined or the control element 32 may adjust the capacitance C to fine-tune the frequency response of the RFID transponder.

The RFID transponder may comprise a microchip 32 for creating the predefined resonant frequency for communicating with the interrogator device. The control element 32 comprises a light-sensitive component. In one example, the light-sensitive component is configured as part of the microchip 32. If the control element 32 of the RFID transponder is not exposed to light, the light-sensitive component does not conduct electricity and, as a consequence, the resonant circuit 31 is not providing the correct electrical properties that allow the RFID transponder to function at the predefined operating frequency. When the light-sensitive component or multiple light-sensitive components are exposed to light, they become conductive and enable functionality to the RFID transponder circuitry. In one embodiment, this enables sufficient powering of the RFID microchip 32, causing the electrical circuit, such as the resonant circuit 31, to function. When the RFID transponder is being interrogated and the light-sensitive components are not conducting, the RFID transponder's resonant circuitry is unable to provide sufficient energy to the microchip 32.

In one example, the control element 32 is an integrated RFID microchip having at least one processor and a memory, with light-sensitive functionalities described hereinbefore. The light-sensitive component or components may be integrated into the same control element 32 or into the same microchip 32 and as part of the resonant circuit 31.

In one embodiment, the radio frequency identification transponder is passive, configured to collect energy from the radio waves of the interacting RFID interrogator. The transponder does not have an internal power source, allowing an extended lifespan for the transponder. In one embodiment, the control element 31 comprises the RFID microchip, wherein the microchip comprises at least one processor and a memory storing instructions that, when executed, control the access of the reader communication to the radio frequency identification transponder, wherein the predetermined amount of light provides power to the at least one processor and the memory. The control element 31 may comprise a photovoltaic component configured to produce a threshold voltage for enabling the initial communication access to the control element 31, such as the RFID microchip. In one embodiment, an electric current is configured to flow in the resonant circuit 31 in response to a predetermined amount of light, wherein the inductive reception of energy causes the electric current. The control element 32 comprising the RFID microchip is configured to receive at least a portion of the electric current.

In one embodiment, the control element 31 provides access control by detecting a pattern in the predetermined amount of light. The pattern may be a sequence of light pulses in a predefined order, wherein the predefined order may be stored in the memory and compared before proceeding to grant access to the resonant circuit 31. The light used for enabling wireless communication by a light-sensing component may also be used for data communication. A light source, for example, the interrogator, can act as the carrier of information, such as unique series of light patterns, i.e. "keys" which the RFID microchip in the RFID transponder uses to allow data transmission or reception. In one example, the light pattern is used for data manipulation, such as writing information to the RFID microchip's memory.

The unique key pattern which is transmitted by light to the RFID transponder may change dynamically, wherein the microchip in the RFID transponder interprets the dynamic pattern to encrypt or decrypt exchanged data. That further enhances the security of the wireless communication with the interrogator device. Without the light source or unique light key patterns, the RFID transponder will not respond to data inquiry commands by the interrogator and thus other interrogators near the RFID transponder cannot retrieve any meaningful data to be processed through radio waves. An unauthorized interrogator in the vicinity of the RFID transponder would only be able to receive encrypted data signals which are constantly changed by the keys, thus resulting in undecodable data.

The RFID microchip may comprise functions for storing data and communicating wirelessly along with the light recognition circuitry. In one example, the microchip comprises at least one processor, the memory and the photodiode configured to allow an electric current to flow through the RFID microchip. The light-sensitive circuitry may be integrated into the RFID microchip or as separate circuitry in the form of a second microchip.

In one example, the components suitable for the aforementioned applications are solid-state relays configured to switch on and off when a small threshold voltage is applied to its control terminals. In one example, the voltage is provided from a photovoltaic cell in the circuitry. In one embodiment, the light-sensitive component is a photoresistor, causing high resistance in the range of megaohms without the predetermined amount of light. As the photoresistor is exposed to light, the resistance reduces to levels where the resonant circuitry can operate to enable the threshold voltage for waking up the RFID microchip. In one example, the light-sensitive materials comprise a flexible substrate, such as a film with laminated materials, configured to be excited by light and to release free electrons that enable conductivity.

The present solution provides additional security to the data communication between the RFID microchip and the interrogator device. In one embodiment, the communication may be always enabled, secured by the functional component reacting to light. A complementary system, light, is used to allow the communication; unlike in purely radio frequency-based communication where the signals can be retrieved from the RFID transponder.

One exemplary use case is a contactless payment system, e.g. for fare collection in public transportation. A contactless fare ticket, card or other product can be read from a passenger's pocket without the passenger being aware of it. When such a contactless fare product is equipped with a light-sensitive component, it cannot be read without the passenger taking the product from the pocket close to a light source.

The solution described hereinbefore may also be used for high-security applications. For example, if the RFID transponder or the object associated with it is exposed to light during an unauthorized use, the microchip initiates a process of deleting information from memory or deactivating the RFID transponder entirely. For example, without a valid command from the RFID interrogator soon after light exposure, the security measures will activate in the RFID transponder. The light-sensitivity can be used as a tamper-proof function.

Different light forms may be used, for example, a laser source may apply coherent beam to a very precise area in the RFID transponder. The light form can be of any wavelength/frequency which results in a desirable effect in the components of the RFID transponder.

An example discloses an apparatus for a radio frequency identification transponder, comprising: a resonant circuit configured to resonate at a first frequency, wherein the resonant circuit comprises: at least one resistance element; at least one inductance element; and at least one capacitance element connected in series. A control element is connected to the resonant circuit, wherein the control element is configured to: detect a predetermined amount of light; and, in response to the predetermined amount of light, the control element is configured to change a resonant response of the resonant circuit at the first frequency. In one embodiment, the control element is connected in series with the resonant circuit. In one embodiment, the control element comprises a switching element configured to open or close the resonant circuit, causing the resonant circuit to resonate at a second frequency. In one embodiment, the control element comprises a photoresistor configured to change the resistance of the resonant circuit in response to the predetermined amount of light. In one embodiment, the radio frequency identification transponder is passive. In one embodiment, the control element comprises at least one processor and a memory storing instructions that, when executed, control the communication of the radio frequency identification transponder. In one embodiment, the control element comprises at least one processor and a memory storing instructions that, when executed, detect a pattern in time domain in the predetermined amount of light. In one embodiment, the control element comprises at least one processor and a memory storing instructions that, when executed, control the access of the reader communication to the radio frequency identification transponder, wherein the predetermined amount of light provides power to the at least one processor and the memory. In one embodiment, the control element comprises at least one processor and a memory storing instructions that, when executed, provide the capacitance to the capacitance element. In one embodiment, the control element comprises a switching element configured to open or close a portion of the inductance element, causing the resonant circuit to resonate at a second frequency. In one embodiment, the control element comprises a switching element configured to open or close a portion of the capacitance element, causing the resonant circuit to resonate at a second frequency. In one embodiment, the control element is a light-sensitive surface-mountable electronic component. In one embodiment, the control element is a printed component. In one embodiment, the control element is made of a flexible material. In one embodiment, an electric current is configured to flow in the resonant circuit in response to a predetermined amount of light and an inductive reception of energy, wherein at least one processor and a memory storing instructions are configured to receive at least a portion of the electric current.

Alternatively, or in addition, a method is disclosed, comprising a radio frequency identification transponder, having a resonant circuit resonating at a first frequency, wherein the resonant circuit comprises at least one resistance element, at least one inductance element and at least one capacitance element connected in series. The radio frequency identification transponder comprises a control element connected to the resonant circuit, the control element detecting a predetermined amount of light; and changing a resonant response of the resonant circuit at the first frequency in response to the predetermined amount of light of the control element.

Alternatively, or in addition, the controlling functionality described herein can be performed, at least in part, by one or more hardware components or hardware logic components. An example of the control system described hereinbefore is a computing-based device comprising one or more processors which may be microprocessors, controllers or any other suitable type of processors for processing computer-executable instructions to control the operation of the device in order to control one or more sensors, receive sensor data and use the sensor data. The computer-executable instructions may be provided using any computer-readable media that is accessible by a computing-based device. Computer-readable media may include, for example, computer storage media, such as memory and communications media. Computer storage media, such as memory, includes volatile and non-volatile, removable and non-removable media implemented in any method or technology for storage of information, such as computer-readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer-readable instructions, data structures, program modules, or other data in a modulated data signal, such as a carrier wave, or other transport mechanism. As defined herein, computer storage media does not include communication media. Therefore, a computer storage medium should not be interpreted to be a propagating signal per se. Propagated signals may be present in a computer storage media, but propagated signals per se are not examples of computer storage media. Although the computer storage media is shown within the computing-based device, it will be appreciated that the storage may be distributed or located remotely and accessed via a network or other communication link, for example, by using a communication interface.

The methods described herein may be performed by software in machine-readable form on a tangible storage medium, e.g. in the form of a computer program comprising computer program code means adapted to perform all the steps of any of the methods described herein when the program is run on a computer and where the computer program may be embodied on a computer-readable medium. Examples of tangible storage media include computer storage devices comprising computer-readable media, such as disks, thumb drives, memory etc., and do not only include propagated signals. Propagated signals may be present in a tangible storage media, but propagated signals per se are not examples of tangible storage media. The software can be suitable for execution on a parallel processor or a serial processor such that the method steps may be carried out in any suitable order, or simultaneously.

Any range or device value given herein may be extended or altered without losing the effect sought.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The term 'comprising' is used herein to mean including the method blocks or elements identified, but that such blocks or elements do not comprise an exclusive list and a method or apparatus may contain additional blocks or elements.

It will be understood that the above description is given by way of example only and that various modifications may be made by those skilled in the art.

## Claims

1. A radio frequency identification transponder, comprising:
a resonant circuit (11) configured to resonate at a first frequency,
wherein the resonant circuit (11) comprises:
at least one resistance element (R);
at least one inductance element (L); and
at least one capacitance element (C), wherein
the at least one resistance element (R), the at least one inductance element (L) and the at least one capacitance element (C) are connected in series,
a control element (10), having at least one processor and a memory, is connected to the resonant circuit (11) ; and
said at least one processor and a memory storing instructions that, when executed, detect a pattern in time domain in the predetermined amount of light (13);
**characterized in that**:
the control element (10) is configured to detect a predetermined amount of light (13); and
in response to the predetermined amount of light (13), the control element (10) is configured to change a resonant response of the resonant circuit (11) at the first frequency, wherein
the control element (10) comprises a photoresistor configured to change the resistance of the resonant circuit (11, 21) in response to the predetermined amount of light (13).

2. A radio frequency identification transponder according to claim 1,
**characterized in that** the control element (12) is connected in series with the resonant circuit (11).

3. A radio frequency identification transponder according claim 1 or claim 2, **characterized in that** the radio frequency identification transponder is passive.

4. A radio frequency identification transponder according to any of the claims 1 to 3, **characterized by** the control element (12, 22, 32) comprising said at least one processor and said memory storing instructions that, when executed, control the communication of the radio frequency identification transponder.

5. A radio frequency identification transponder according to any of the claims 1 to 4, **characterized by** the control element (12, 22, 32, 10) comprising said at least one processor and said memory storing instructions that, when executed, control the access of the reader communication to the radio frequency identification transponder, wherein the predetermined amount of light (13) provides power to the at least one processor and the memory.

6. A radio frequency identification transponder according to any of the claims 1 to 5, **characterized in that** the control element (12, 22, 32) is a light-sensitive surface-mountable electronic component or a printed component.

7. A radio frequency identification transponder according to any of the claims 1 to 6, **characterized in that** the control element (12, 22, 32) is made of a flexible material.

8. A radio frequency identification transponder according to any of the claims 1 to 7, **characterized in that** an electric current is configured to flow in the resonant circuit (11, 21, 31) in response to a predetermined amount of light (13) and an inductive reception of energy, wherein said at least one processor and said memory storing instructions are configured to receive at least a portion of the electric current.

9. A method, comprising a radio frequency identification transponder, having a resonant circuit (11) resonating at a first frequency, wherein the resonant circuit (11) comprises at least one resistance element (R), at least one inductance element (L) and at least one capacitance element (C) connected in series, a control element (10), having at least one processor and a memory, is connected to the resonant circuit (11); and said at least one processor and a memory storing instructions that, when executed, cause the processor to detecting a pattern in time domain in the predetermined amount of light (13); **characterized by** the control element (10):
detecting a predetermined amount of light (13);
changing a resonant response of the resonant circuit (11, 21) in response to the predetermined amount of light (13);
changing the resistance of the resonant circuit (11, 21) at the first frequency in response to the predetermined amount of light (13); and
changing, by a photoresistor of the control element (10), the resistance of the resonant circuit (11, 21) in response to the predetermined amount of light (13).

## Patentansprüche

1. Radiofrequenz-Identifikationstransponder, umfassend:
eine Resonanzschaltung (11), die dazu eingerichtet ist, mit einer ersten Frequenz zu schwingen, wobei die Resonanzschaltung (11) umfasst:
mindestens ein Widerstandselement (R);
mindestens ein Induktivitätselement (L); und
mindestens ein Kapazitätselement (C), wobei
das mindestens eine Widerstandselement (R), das mindestens eine Induktivitätselement (L) und das mindestens eine Kapazitätselement (C) in Reihe geschaltet sind,
ein Steuerungselement (10), das mindestens einen Prozessor und einen Speicher aufweist, mit der Resonanzschaltung (11) verbunden ist; und
der mindestens eine Prozessor und eine Speicher Anweisungen speichern, die, bei Ausführung, ein Muster im Zeitbereich in der vorherbestimmten Lichtmenge (13) erfassen;
**dadurch gekennzeichnet, dass**
das Steuerungselement (10) dazu eingerichtet ist, eine vorherbestimmte Lichtmenge (13) zu erfassen; und
das Steuerungselement dazu eingerichtet ist, in Antwort auf die vorherbestimmte Lichtmenge (13) eine Resonanzantwort der Resonanzschaltung (11) bei der ersten Frequenz zu ändern, wobei
das Steuerungselement (10) einen Fotowiderstand umfasst, der dazu eingerichtet ist, den Widerstand der Resonanzschaltung (11, 21) in Antwort auf die vorherbestimmte Lichtmenge (13) zu ändern.

2. Radiofrequenz-Identifikationstransponder nach Anspruch 1, **dadurch gekennzeichnet, dass** das Steuerungselement (12) mit der Resonanzschaltung (11) in Reihe geschaltet ist.

3. Radiofrequenz-Identifikationstransponder nach Anspruch 1 oder Anspruch 2, **dadurch gekennzeichnet, dass** der Radiofrequenz-Identifikationstransponder passiv ist.

4. Radiofrequenz-Identifikationstransponder nach einem der Ansprüche 1 bis 3, **dadurch gekennzeichnet, dass** das Steuerungselement (12, 22, 32) den mindestens einen Prozessor und den Speicher umfasst, der Anweisungen speichert, die bei Ausführung die Kommunikation des Radiofrequenz-Identifikationstransponders steuern.

5. Radiofrequenz-Identifikationstransponder nach einem der Ansprüche 1 bis 4, **dadurch gekennzeichnet, dass** das Steuerungselement (12, 22, 32, 10) den mindestens einen Prozessor und den Speicher umfasst, der Anweisungen speichert, die bei Ausführung den Zugriff der Leserkommunikation auf den Radiofrequenz-Identifikationstransponder steuern, wobei die vorherbestimmte Lichtmenge (13) den mindestens einen Prozessor und den Speicher mit Energie versorgt.

6. Radiofrequenz-Identifikationstransponder nach einem der Ansprüche 1 bis 5, **dadurch gekennzeichnet, dass** das Steuerungselement (12, 22, 32) ein lichtempfindliches oberflächenmontierbares elektronisches Bauteil oder ein gedrucktes Bauteil ist.

7. Radiofrequenz-Identifikationstransponder nach einem der Ansprüche 1 bis 6, **dadurch gekennzeichnet, dass** das Steuerungselement (12, 22, 32) aus einem flexiblen Material gefertigt ist.

8. Radiofrequenz-Identifikationstransponder nach einem der Ansprüche 1 bis 7, **dadurch gekennzeichnet, dass** ein elektrischer Strom so eingerichtet ist, dass er in der Resonanzschaltung (11, 21, 31) in Antwort auf eine vorherbestimmte Lichtmenge (13) und eine induktive Energieaufnahme fließt, wobei der mindestens eine Prozessor und der Anweisungen speichernde Speicher dazu eingerichtet sind, mindestens einen Teil des elektrischen Stroms aufzunehmen.

9. Verfahren, das einen Radiofrequenz-Identifikationstransponder mit einer mit einer ersten Frequenz schwingenden Resonanzschaltung (11) umfasst, wobei die Resonanzschaltung (11) mindestens ein Widerstandselement (R), mindestens ein Induktivitätselement (L) und mindestens ein Kapazitätselement (C) umfasst, die in Reihe geschaltet sind, ein Steuerungselement (10), das mindestens einen Prozessor und einen Speicher aufweist, mit der Resonanzschaltung (11) verbunden ist; und
der mindestens eine Prozessor und eine Speicher Anweisungen speichern, die, bei Ausführung, den Prozessor dazu veranlassen, ein Muster im Zeitbereich in der vorherbestimmten Lichtmenge (13) zu erfassen; **dadurch gekennzeichnet, dass** das Steuerungselement (10):
eine vorherbestimmte Lichtmenge (13) erfasst;
eine Resonanzantwort der Resonanzschaltung (11, 21) in Antwort auf die vorherbestimmte Lichtmenge (13) ändert;
den Widerstand der Resonanzschaltung (11, 21) bei der ersten Frequenz in Antwort auf die vorherbestimmte Lichtmenge (13) ändert; und
durch einen Fotowiderstand des Steuerelements (10) den Widerstand der Resonanzschaltung (11, 21) in Antwort auf die vorherbestimmte Lichtmenge (13) ändert.

## Revendications

1. Transpondeur d'identification par radiofréquence, comprenant :
un circuit résonnant (11) configuré pour résonner à une première fréquence, ledit circuit résonnant (11) comprenant :
au moins un élément résistant (R) ;
au moins un élément d'inductance (L) ; et
au moins un élément de capacité (C),
ledit au moins un élément résistant (R), ledit au moins un élément d'inductance (L) et ledit au moins un élément de capacité (C) étant montés en série,
un élément de commande (10), qui comporte au moins un processeur et une mémoire, étant relié audit circuit résonnant (11) ; et
lesdits au moins un processeur et une mémoire stockant des instructions qui, lorsqu'elles sont exécutées, détectent un motif en domaine temporel dans la quantité de lumière prédéterminée (13) ;
**caractérisé en ce que**
l'élément de commande (10) est configuré pour détecter une quantité de lumière prédéterminée (13) ; et
l'élément de commande (10) est configuré pour changer, en réponse à la quantité de lumière prédéterminée (13), une réponse résonnante du circuit résonnant (11) à la première fréquence,
ledit élément de commande (10) comprenant une photorésistance configurée pour changer la résistance du circuit résonnant (11, 21) en réponse à la quantité de lumière prédéterminée (13).

2. Transpondeur d'identification par radiofréquence selon la revendication 1, **caractérisé en ce que** l'élément de commande (12) est monté en série avec le circuit résonnant (11).

3. Transpondeur d'identification par radiofréquence selon la revendication 1 ou la revendication 2, **caractérisé en ce que** le transpondeur d'identification par radiofréquence est passif.

4. Transpondeur d'identification par radiofréquence selon l'une des revendications 1 à 3, **caractérisé en ce que** l'élément de commande (12, 22, 32) comprend ledit au moins un processeur et ladite mémoire stockant des instructions qui, lorsqu'elles sont exécutées, commandent la communication du transpondeur d'identification par radiofréquence.

5. Transpondeur d'identification par radiofréquence selon l'une des revendications 1 à 4, **caractérisé en ce que** l'élément de commande (12, 22, 32, 10) comprend ledit au moins un processeur et ladite mémoire stockant des instructions qui, lorsqu'elles sont exécutées, commandent l'accès de la communication de lecteur au transpondeur d'identification par radiofréquence, la quantité de lumière prédéterminée (13) fournissant de l'énergie audit au moins un processeur et à ladite mémoire.

6. Transpondeur d'identification par radiofréquence selon l'une des revendications 1 à 5, **caractérisé en ce que** l'élément de commande (12, 22, 32) est un composant électronique photosensible montable en surface ou un composant imprimé.

7. Transpondeur d'identification par radiofréquence selon l'une des revendications 1 à 6, **caractérisé en ce que** l'élément de commande (12, 22, 32) est fait d'un matériau flexible.

8. Transpondeur d'identification par radiofréquence selon l'une des revendications 1 à 7, **caractérisé en ce qu'**un courant électrique est configuré pour circuler dans le circuit résonnant (11, 21, 31) en réponse à une quantité de lumière prédéterminée (13) et une réception inductive d'énergie, ledit au moins un processeur et ladite mémoire stockant des instructions étant configurés pour recevoir au moins une partie du courant électrique.

9. Procédé comprenant un transpondeur d'identification par radiofréquence comportant un circuit résonnant (11) qui résonne à une première fréquence, ledit circuit résonnant (11) comprenant au moins un élément résistant (R), au moins un élément d'inductance (L), et au moins un élément de capacité (C) montés en série, un élément de commande (10), qui comporte au moins un processeur et une mémoire, étant relié audit circuit résonnant (11) ; et
lesdits au moins un processeur et une mémoire stockant des instructions qui, lorsqu'elles sont exécutées, amènent le processeur à détecter un motif en domaine temporel dans la quantité de lumière prédéterminée (13) ; **caractérisé en ce que** l'élément de commande (10) :
détecte une quantité de lumière prédéterminée (13) ;
change une réponse résonnante du circuit résonnant (11, 21) en réponse à la quantité de lumière prédéterminée (13) ;
change la résistance du circuit résonnant (11, 21) à la première fréquence en réponse à la quantité de lumière prédéterminée (13) ; et
change la résistance du circuit résonnant (11, 21), par une photorésistance de l'élément de commande (10), en réponse à la quantité de lumière prédéterminée (13).
